# EUROPEAN PATENT APPLICATION

(11) **EP 4 484 813 A1**
(43) Date of publication of application: **01.01.2025**
(21) Application number: 24184672.4
(22) Date of filing: 26.06.2024
(51) Int. Cl.: F16L 3/223, F16L 3/237, F16L 55/035

(54) **TUBE CLAMP CONFIGURED TO BE MOUNTED TO STUD ON PANEL OR IN HOLE IN PANEL**

(30) Priority: 27.06.2023 US 202363510488 P; 03.06.2024 US 202418732232
(71) Applicant: Newfrey LLC, New Britain, CT 06053 (US)
(72) Inventor: EDWARDS, Austin, Rochester Hills, 48307 (US); DIEP, Tien T., West Bloomfiled Township, 48324 (US); RASSAM, Najwan, Troy, 48085 (US); MEYERS, Jason. A., Shelby Township, 48317 (US); BATTINI, Naga, Troy, 48084 (US)
(74) Representative: SBD IPAdmin

(57) **Abstract**

A tube clamp includes an inner frame, an outer frame, and a plurality of tethers connecting the inner and outer frames to one another. The inner frame is configured to be mounted to a panel. The inner frame includes a pair of side walls and a top wall. The outer frame is configured to clamp at least one tube therein. The outer frame includes an main body and a pair of legs projecting downward from the main body. The tethers include at least one vertical tether that projects upward from the top wall of the inner frame to the main body of the outer frame.

## Description

### FIELD

The present disclosure relates to a tube clamp configured to be mounted to a stud on a panel or in a hole in a panel.

### BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Tube clamps are used in automotive applications to mount one or more tubes, such as brake lines or fuel lines, to a panel, such as a vehicle body panel. In many such applications, it is desirable to isolate the tubes clamped by the tube clamp from vibration in the panel. One common technique to achieve this goal is to use a hard material for a majority of the tube clamp and insert a softer damping material in the tube clamp between the tube and the panel. Typically, this is achieved by lining pockets in the tube clamp that receive the tubes with a soft plastic or rubber damping material. Such tube clamps are often manufactured using two-shot injection molding, which can be complex and expensive.

Another vibration isolation technique involves placing flexible connecting or suspending elements in the tube clamp between the panel and the tubes. The connecting elements are part of the tube clamp are made of the same material as the rest of the tube clamp. For example, U.S. Pat. No. 7,651,057 describes a tube clamp constructed of a first part engaging a stud on a panel, a second part clamping tubes, and connecting or isolating elements between the first and second parts. The connecting elements are thinner and more flexible than the rest of the tube clamp but made of the same material as the rest of the tube clamp. The connecting elements dampen vibrations sufficiently to eliminate the need for a softer damping material that requires two-shot injection molding. However, the effectiveness of such tube clamps at damping vibrations may be improved.

### SUMMARY

A tube clamp according to the present disclosure includes an inner frame, an outer frame, and a plurality of tethers connecting the inner and outer frames to one another. The inner frame is configured to be mounted to a panel. The outer frame is configured to clamp at least one tube therein.

In one example, the inner frame includes a pair of side walls and a top wall, the outer frame includes a main body and a pair of legs projecting downward from the main body, and the tethers include at least one vertical tether that projects upward from the top wall of the inner frame to the main body of the outer frame

In one aspect, the top wall of the inner frame is flat.

In one aspect, the plurality of tethers further includes at least one horizontal tether projecting outward from one of the side walls of the inner frame to one of the legs of the outer frame.

In one aspect, the at least one horizontal tether includes a pair of horizontal tethers with one of the horizontal tethers projecting outward from one of the side walls of the inner frame to one of the legs of the outer frame, and the other one of the horizontal tethers projecting outward from the other one of the side walls of the inner frame to the other one of the legs of the outer frame.

In one aspect, the one horizontal tether is attached to the one side wall at a front side of the tube clamp and is attached to the one leg at a rear side of the tube clamp, and the other horizontal tether is attached to the other side wall at the rear side of the tube clamp and is attached to the other leg at the front side of the tube clamp.

In one aspect, the at least one vertical tether includes three vertical tethers projecting upward from the top wall of the inner frame to the main body of the outer frame.

In one aspect, two of the three vertical tethers are attached to the top wall of the inner frame on the same side of the tube clamp and the third vertical tether is attached to the top wall on the opposite side of the tube clamp, and the two vertical tethers are attached to the main body of the outer frame on the same side of the tube clamp, and the third vertical tether is attached to the main body of the outer frame on the opposite side of the tube clamp.

In one aspect, the inner frame further includes horizontal tabs that project outward from the side walls and vertical tabs that project upward from the top wall, the horizontal tabs are configured to engage the legs on the outer frame to limit movement of the outer frame relative to the inner frame in a side-to-side direction, and the vertical tabs are configured to engage the main body of the outer frame to limit movement of the outer frame relative to the inner frame in a vertical direction.

In one aspect, each leg of the outer frame includes a tab that projects inward from its distal end toward one of the side walls on the inner frame and is configured to engage the one side wall to limit movement of the outer frame relative to the inner frame in a side-to-side direction.

In one aspect, the inner frame further includes a bottom wall and a plurality of stud engaging claws, the bottom wall defining a hole configured to receive a stud fixed to the panel, the plurality of stud engaging claws projecting inward from the side walls and configured to engage threads on the stud.

In one aspect, the inner frame further includes a pair of feet that project outward and downward from lower corners thereof where the side walls meet the bottom wall, and the feet are configured to act as springs that bias the tube clamp upward and thereby maintain the stud engaging claws in engagement with the threads on the stud.

In one aspect, the inner frame further includes a bottom wall and a base projecting downward from the bottom wall and configured to be retained within a hole in the panel via a snap fit.

In one aspect, the base includes an elongated body and a pair of protrusions that project in opposite directions from the elongated body. As the base enters the hole in the panel, the protrusions are configured to flex inward toward one another due to engagement with a perimeter of the hole. When the protrusions are moved past the hole in the panel, the protrusions return to their relaxed state and engage an underside surface of the panel and thereby inhibit withdrawal of the base from the hole in the panel.

In one aspect, the elongated body is a hollow rectangular body, the rectangular body defines a pair of openings in which the protrusions are positioned, each opening having a pair of side edges and a bottom edge, and each protrusion extends from the bottom edge of one of the openings and is detached from the side edges of the one opening.

In one aspect, the base includes an elongated body and a plurality of ribs that project from a side surface of the elongated body and are spaced apart from one another along a longitudinal axis of the elongated body. As the base enters the hole in the panel, the plurality of ribs are configured to flex inward toward the elongated body due to engagement with a perimeter of the hole. When the plurality of ribs are moved past the hole in the panel, the plurality of ribs return to their relaxed state and engage an underside surface of the panel and thereby inhibit withdrawal of the base from the hole in the panel.

In another example of the disclosure, each tether of the plurality of tethers has an S shape. More particularly, the tube clamp comprises an inner frame configured to be mounted to the panel; an outer frame configured to clamp the at least one tube therein; and a plurality of tethers connecting the inner and outer frames to one another, wherein each tether of the plurality of tethers has an S shape.

In one aspect, the S shape of each tether is defined by a pair of end portions and a middle portion that connects the end portions to one another, with the middle portion being longer than the end portions.

In one aspect, the end portions extend at a right angle from a surface of one of the inner and outer frames, and the middle portion extends at one of the right angle and an obtuse angle from the end portions.

In one aspect, the plurality of tethers includes a first tether and a second tether, the first tether is attached to the inner frame at a front side of the tube clamp and is attached to the outer frame at a rear side of the tube clamp, and the second tether is attached to the inner frame at the rear side of the tube clamp and is attached to the outer frame at the front side of the tube clamp.

In yet another example of the disclosure, the inner frame includes a pair of side walls, a top wall, and a bottom wall, the outer frame is configured to clamp at least two tubes therein, the outer frame is disposed outside of and fits around the inner frame, the outer frame includes an oblong body and a pair of legs projecting downward from the oblong body, the oblong body is disposed above the top wall of the inner frame and the legs are disposed alongside the side walls of the inner frame, each tether of the plurality of tethers has an S shape, the plurality of tethers includes two horizontal tethers and three vertical tethers, one of the horizontal tethers projects outward from one of the side walls of the inner frame to one of the legs of the outer frame, the other horizontal tether projects outward from the other side wall of the inner frame to the other leg of the outer frame, and the vertical tethers project upward from the top wall of the inner frame to the oblong body of the outer frame.

In one aspect, the one horizontal tether is attached to the one side wall at a front side of the tube clamp and is attached to the one leg at a rear side of the tube clamp, and the other horizontal tether is attached to the other side wall at the rear side of the tube clamp and is attached to the other leg at the front side of the tube clamp.

In one aspect, the top wall is straight, two of the three vertical tethers are attached to the top wall of the inner frame on the same side of the tube clamp and the third vertical tether is attached to the top wall on the opposite side of the tube clamp, and the two vertical tethers are attached to the oblong body of the outer frame on the same side of the tube clamp, and the third vertical tether is attached to the oblong body of the outer frame on the opposite side of the tube clamp.

Further areas of applicability of the present disclosure will become apparent from the detailed description, the claims and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a front view of an example of a tube clamp according to the principles of the present disclosure, with the tube clamp mounted to a stud that is fixed to a panel;
FIG. 2 is an enlarged perspective view of a portion of the tube clamp of FIG. 1;
FIG. 3 is a perspective view of the tube clamp of FIG. 1 with a lid of the tube clamp in an open position;
FIG. 4 is a sectioned perspective view of the tube clamp of FIG. 1 taken along a line 4-4 shown in FIG. 1;
FIG. 5 is a section view of the tube clamp of FIG. 1 taken along a line 5-5 shown in FIG. 1;
FIG. 6 is a section view of the tube clamp of FIG. 1 taken along a line 6-6 shown in FIG. 1;
FIG. 7 is a perspective view of another example of a tube clamp according to the principles of the present disclosure, with the tube clamp positioned above a hole in a panel;
FIG. 8 is rear view of the tube clamp of FIG. 7 mounted in the hole in the panel;
FIGS. 9 through 11 are section views of the tube clamp of FIG. 7 being inserted into the hole in the panel; and
FIGS. 12 through 15 are perspective views of other examples of a tube clamp according to the principles of the present disclosure positioned above a hole in a panel.

In the drawings, reference numbers may be reused to identify similar and/or identical elements.

### DETAILED DESCRIPTION

A tube clamp according to the present disclosure is similar to the tube clamp described above that has a first part engaging a stud on a panel, a second part clamping tubes, and connecting or isolating elements between the first and second parts. However, a tube clamp according to the present disclosure has a unique arrangement of the connecting elements that dampens vibrations more effectively than existing tube clamps. In addition, a tube clamp according to the present disclosure can be mounted to a stud on a panel or in a hole in a panel. Furthermore, a tube clamp according to the present disclosure includes a number of other features that set it apart from existing tube clamps, as will be apparent from the description below.

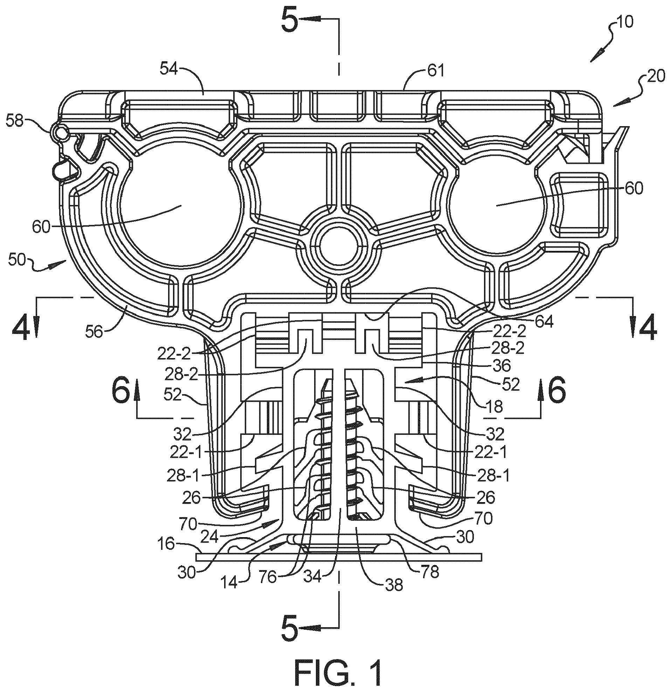

Referring now to FIGS. 1 through 6, a tube clamp 10 is for securing tubes (not shown) to a stud 14 fixed to a panel 16. For example, the tubes may be brake fluid lines or fuel lines, and the panel 16 may be a vehicle body panel. The tube clamp 10 includes an inner frame 18, an outer frame 20 that is disposed outside of and fits around the inner frame 18, and a plurality of tethers 22 connecting the inner and outer frames 18 and 20 to one another. The inner frame 18 is configured to be mounted to the stud 14, the outer frame 20 is configured to clamp the tubes, and the tethers 22 are configured to isolate the outer frame 20 and, any tubes clamped therein, from vibrations in the panel 16. The entire tube clamp 10 may be formed (e.g., injection molded) as a unitary body in a single operation (e.g., a single shot) from a plastic material such as nylon.

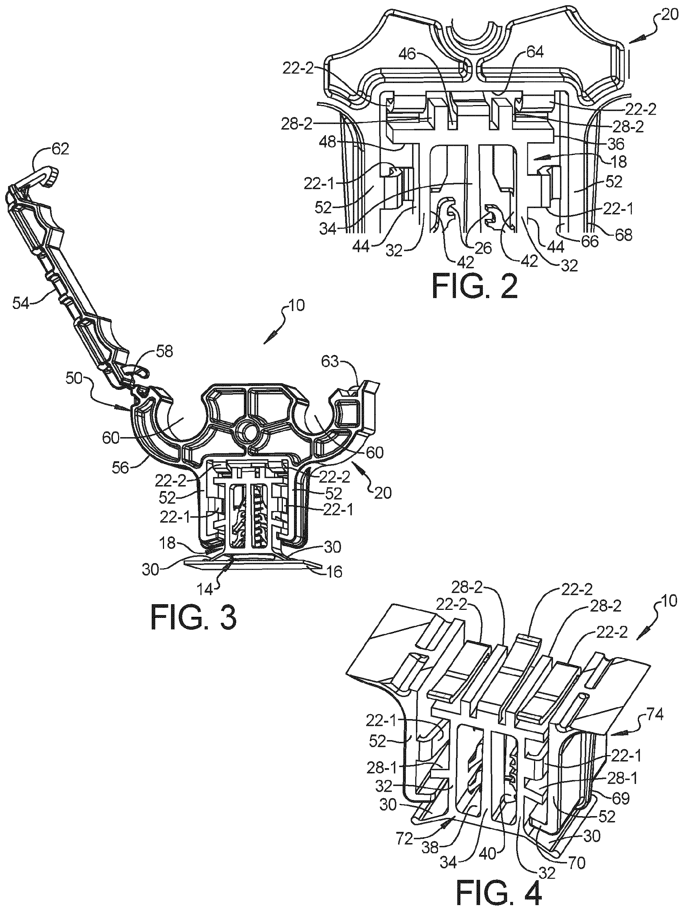

The inner frame 18 includes a rectangular body 24, a plurality of stud engaging claws 26, a plurality of tabs 28, and a pair of feet 30. The rectangular body 24 includes a pair of side walls 32, a pair of center supports 34, a top wall 36, and a bottom wall 38. The side walls 32 and the center supports 34 extend between the top and bottom walls 36 and 38 and connect the top and bottom walls 36 and 38 to one another. In addition, the side walls 32 and the center supports 34 are configured to form a pocket around a shank 39 of the stud 14. The top wall 36 may be straight as shown to yield a desired frequency response. For example, the top wall 36 may extend in a straight line between the side walls 32, and the top and bottom surfaces of the top wall 36 may be flat. If the top wall 36 is not straight, the top wall 36 may act like a spring and negatively affect the amplitude of vibrations in a target frequency range. As best shown in FIG. 4, the bottom wall 38 defines a hole 40 configured to receive the shank of the stud 14.

Each side wall 32 has an inner surface 42 and an outer surface 44, and each of the top and bottom walls 36 and 38 has an upper surface 46 and a lower surface 48. The tethers 22 include horizontal tethers 22-1 that project outward from the outer surfaces 44 of the side walls 32 and vertical tethers 22-2 that project upward from the upper surface 46 of the top wall 36. The horizontal and vertical tethers 22-1 and 22-2 do not extend forward beyond the front side of the inner fame 18 or rearward beyond the rear side of the inner frame 18. The tabs 28 include horizontal tabs 28-1 that project outward from the outer surfaces 44 of the side walls 32 toward legs 52 of the outer frame 20, and vertical tabs 28-2 that project upward from the upper surface 46 of the top wall 36 toward a main body 50 of the outer frame 20. The feet 30 project outward and downward from corners of the rectangular body 24 where the outer surfaces 44 of the side walls 32 meet the lower surface 48 of the bottom wall 38. In various implementations, the bottom wall 38 may be omitted, in which case the feet 30 may project outward and downward from the free ends of the side walls 32.

The outer frame 20 includes the main body 50 and a pair of the legs 52, which project downward from the main body 50 to form a pocket around the side walls 32 and the top wall 36 of the inner frame 18. The main body 50 includes an upper portion 54, a lower portion 56, and a living hinge 58 connecting the upper and lower portions 54 and 56 to one another while allowing the upper portion 54 to pivot with respect to the lower portion 56. The legs 52 extend parallel to the side walls 32 of the inner frame 18 and are spaced apart therefrom. The upper and lower portions 54 and 56 of the main body 50 cooperate to define holes 60 configured to receive the tubes. As best shown in FIG. 3, the upper portion 54 of the main body 50 has a lever 62 disposed at one end thereof that engages a latch 63 on the lower portion 56 via a snap fit. The upper portion 54 of the main body 50 may be referred to as a lid of the tube clamp 10. Although the main body 50 is shown as having an oblong shape with two holes for securing two tubes, the main body 50 may have a different shape (e.g., square) and/or may have less holes (e.g., one hole) or more holes (e.g., three holes).

The main body 50 has an upper surface 61 and a lower surface 64. Each leg 52 has an inner surface 66, an outer surface 68, a rib 69 projecting from the outer surface 68, and a tab 70 projecting inward from the distal end of each leg 52 toward the side walls 32 on the inner frame 18. The ribs 69 may be included to increase the stiffness of each leg 52. Alternatively, the ribs 69 may be omitted and/or the stiffness of each leg 52 may be increased in other ways, such as including a double-wall feature (e.g., each leg 52 may have an I-beam shape). The horizontal tethers 22-1 project inward from the inner surfaces 66 of the legs 52, and the vertical tethers 22-2 project downward from the lower surface 64 of the main body 50. The tethers 22, the stud engaging claws 26, the feet 30, the living hinge 58, and/or the lever 62 may be thinner than the rest of the tube clamp 10 to enable these components to flex during use.

The arrangement of the tethers 22, including their geometry, number, location, and attachment points, improve the effectiveness of the tethers 22 at damping vibration transmission from the inner frame 18 to the outer frame 20. The tethers 22 isolate the outer frame 20 from vibrations in multiple axes. Each tether 22 has an S shape defined by a pair of shorter end portions 71 and a longer middle portion 73 that connects the shorter end portions 71 to one another. The end portions 71 are relatively straight and extend at a right angle from a surface of the inner or outer frame 18 or 20. The middle portion 73 includes straight sections and curved sections. One end of the middle portion 73 extends at a right angle from one of the end portions 71, and the other end of the middle portion 73 extends at an obtuse angle from the other one of the end portions 71.

Although the tube clamp 10 is shown as including five tethers 22 - two horizontal tethers 22-1 and three vertical tethers 22-2 - the tube clamp 10 may include additional or fewer tethers 22. The horizontal tethers 22-1 are located at or near the midpoint of the side walls 32 of the rectangular body 24. Two of the vertical tethers 22-2 are located at opposite ends of the top wall 36 of the rectangular body 24, and the third vertical tether 22-2 is located at or near the midpoint of the top wall 36.

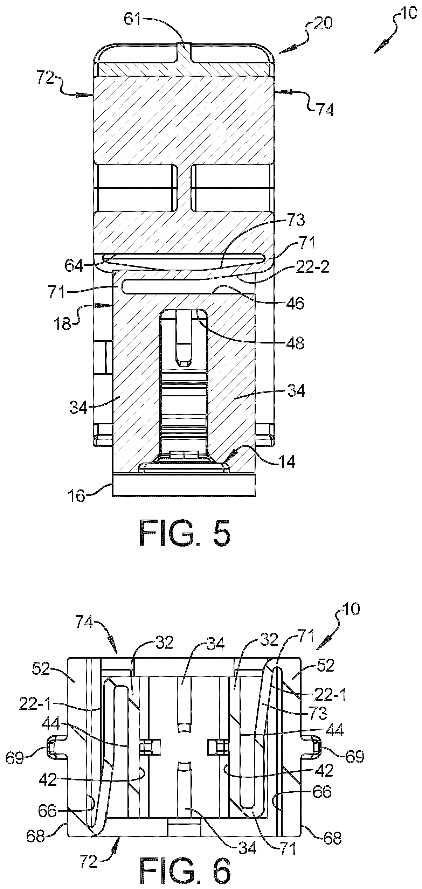

The horizontal tethers 22-1 attach to the side walls 32 of the inner frame 18 at opposite sides of the tube clamp 10 and attach to the legs 52 of the outer frame 20 at opposite sides of the tube clamp 10. For example, as best shown in FIG. 6, one horizontal tether 22-1 attaches to one side wall 32 at a front side 72 of the tube clamp 10, and the other horizontal tether 22-1 attaches to the other side wall 32 at a rear side 74 of the tube clamp 10. Similarly, the one horizontal tether 22-1 attaches to one leg 52 at the rear side 74 of the tube clamp 10, and the other horizontal tether 22-1 attaches to the other leg 52 at the front side 72 of the tube clamp 10.

Two of the vertical tethers 22-2 attach to the top wall 36 of the inner frame 18 on the same side of the tube clamp 10, and the third vertical tether 22-2 attaches to the top wall 36 on the opposite side of the tube clamp 10. In the example shown, the outer vertical tethers 22-2 attach to the top wall 36 at the rear side 74 of the tube clamp 10, and the center vertical tether 22-2 attaches to the top wall 36 at the front side 72 of the tube clamp 10. Similarly, two of the vertical tethers 22-2 attach to the main body 50 of the outer frame 20 on the same side of the tube clamp 10, and the third vertical tether 22-2 attaches to the main body 50 on the opposite side of the tube clamp 10. In the example shown, the outer vertical tethers 22-2 attach to the main body 50 at the front side 72 of the tube clamp 10, and the center vertical tether 22-2 attaches to the main body 50 at the rear side 74 of the tube clamp 10.

The tethers 22 allow the inner and outer frames 18 and 20 to move relative to one another in six directions or axes. These six axes include a vertical axis, a horizontal or side-to-side axis, a fore-aft axis (i.e., an axis extending into and out of the page in FIG. 1), and a rotational axis about each of the vertical, horizontal, and fore-aft axes. The arrangement of the tethers 22 provides more uniform resistance in each of these six axes relative to existing tube clamps.

The horizontal tabs 28-1 on the inner frame 18 may engage the legs 52 on the outer frame 20, and the tabs 70 on the legs 52 may engage the side walls 32 of the inner frame 18, to limit movement of the outer frame 20 relative to the inner frame 18 in a side-to-side direction. Similarly, the vertical tabs 28-2 on the inner frame 18 may engage the lower surface 64 on the outer frame 20 to limit movement of the outer frame 20 relative to the inner frame 18 in a vertical direction. The horizontal and vertical tabs 28-1 and 28-1 may also limit rotational movement of the outer frame 20 relative to the inner frame 18 in a direction about an axis parallel to the holes 60 in the tube clamp 10.

To mount the tube clamp 10 to the stud 14, the hole 40 in the tube clamp 10 is positioned above the shank 39 of the stud 14, and the tube clamp 10 is moved toward the stud 14 so that the shank 39 is inserted through the hole 40. As the shank 39 is inserted through the hole 40, the stud engaging claws 26 flex outward due to engagement with the shank 39 and threads 76 thereon, and then flex inward to a lesser degree to engage underside surfaces of the threads 76 as the threads 76 move past the claws 26. In this way, the stud engaging claws 26 act as a ratcheting mechanism by allowing the stud 14 to be inserted into the hole 40 while inhibiting withdrawal of the stud 14 from the hole 40. The stud 14 is inserted into the hole 40 until a head 78 of the stud 14 contacts the bottom wall 38 of the inner frame 18 as shown in FIG. 4. In this position, the feet 30 may act as springs that bias the tube clamp 10 upward and thereby maintain the stud engaging claws 26 in engagement with the threads 76 on the stud 14.

To clamp the tubes in the tube clamp 10, the upper portion 54 of the main body 50 is moved to its open position as shown in FIG. 3. The tubes are then placed into the holes 60 in the tube clamp 10, and the upper portion 54 is rotated about the living hinge 58 from its open position to its closed position, which is shown in FIG. 1. In turn, the lever 62 is inserted into the latch 63 on the lower portion 56, which secures the upper portion 54 to the lower portion 56 via a snap fit. The tubes are then clamped in the holes 60 between the upper and lower portions 54 and 56.

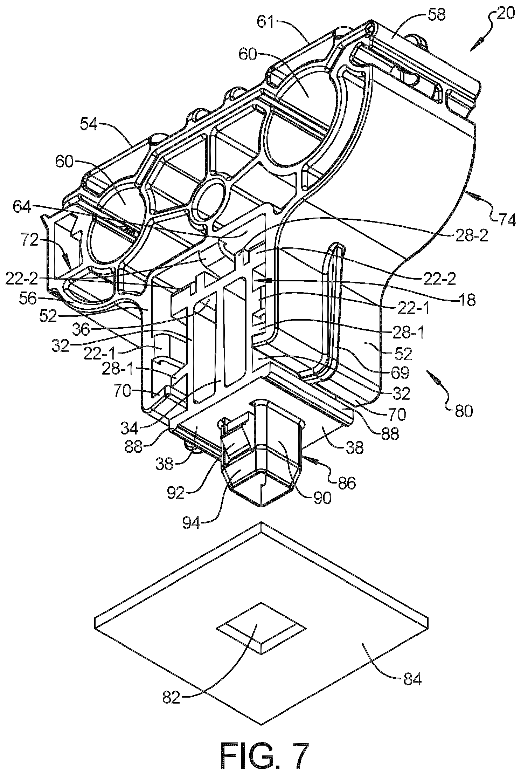

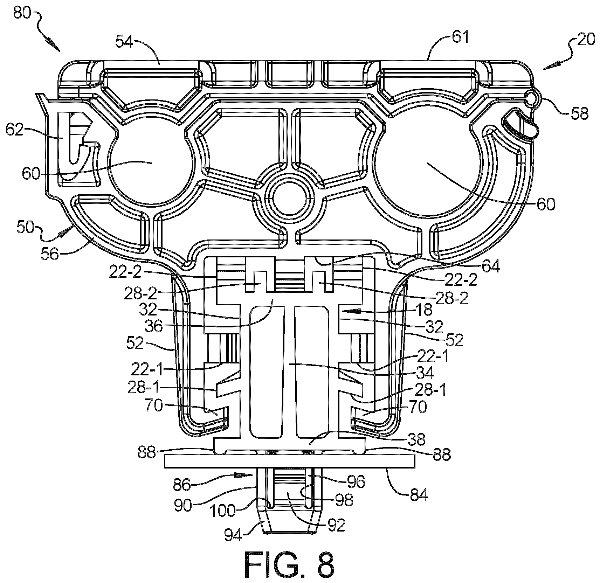

Referring now to FIGS. 7 and 8, a tube clamp 80 is similar or identical to the tube clamp 10 except that, whereas the tube clamp 10 is configured to be mounted to the stud 14 on the panel 16, the tube clamp 80 is configured to be mounted in a hole 82 in a panel 84. More specifically, the tube clamp 80 includes a base 86 projecting downward from the bottom wall 38 in place of the hole 40 in the bottom wall 38, and the tube clamp 80 does not include the stud engaging claws 26. In addition, the bottom wall 38 of the tube clamp 80 extends outward beyond the side walls 32 of the rectangular body 24, and the tube clamp 80 includes feet 88 in place of the feet 30. The feet 88 project downward from the outer ends of the bottom wall 38.

The base 86 of the tube clamp 80 includes a hollow rectangular body 90, and a pair of protrusions 92 that project in opposite directions (e.g., forward and rearward) from the rectangular body 90. The rectangular body 90 has a tapered end 94 that reduces the effort required to insert the base 86 of the tube clamp 80 into the hole 82 in the panel 84. As best shown in FIG. 8, the rectangular body 90 defines a pair of openings 96 in which the protrusions 92 are positioned. Each opening 96 has a pair of side edges 98 and a bottom edge 100. Each protrusion 92 extends from the bottom edge 100 of one of the openings 96 and is detached from the side edges 98 of that opening 96. This allows each protrusion 92 to flex into and out of the opening 96 about the bottom edge 100.

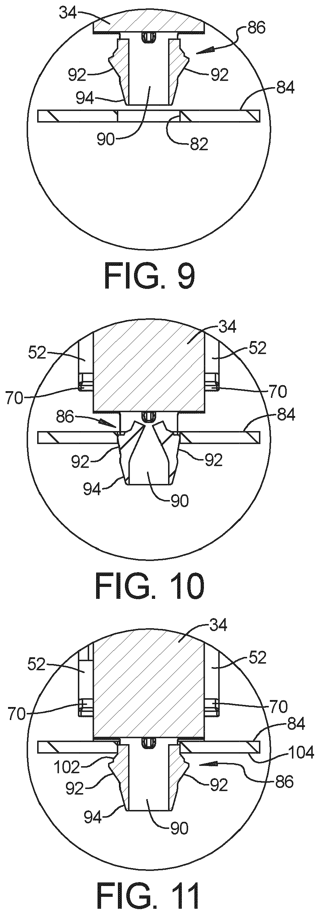

With additional reference to FIGS. 9 through 11, the process of mounting the tube clamp 80 in the hole 82 in the panel 84 begins with positioning the base 86 of the tube clamp 80 above the hole 82 as shown in FIGS. 7 and 9. The tube clamp 80 is then moved downward so that the base 86 of the tube clamp 80 enters the hole 82 in the panel 84. As the base 86 of the tube clamp 80 enters the hole 82 in the panel 84, the protrusions 92 engage the perimeter of the hole 82, which cause the protrusions 92 to flex inward toward one another as shown in FIG. 10. When the protrusions 92 are moved past the hole 82 in the panel 84, the protrusions 92 return to their relaxed state as shown in FIGS. 8 and 11. In this position, teeth 102 on the protrusions 92 engage an underside surface 104 of the panel 84 and thereby inhibit withdrawal of the base 86 from the hole 82 in the panel 84. In this manner, the base 86 of the tube clamp 80 is retained within the hole 82 in the panel 84 via a snap fit therebetween. The base 86 may be referred to as a W base due to its shape in a cross sectional or side view when the protrusions 92 are in their relaxed state as shown in FIGS. 9 and 11.

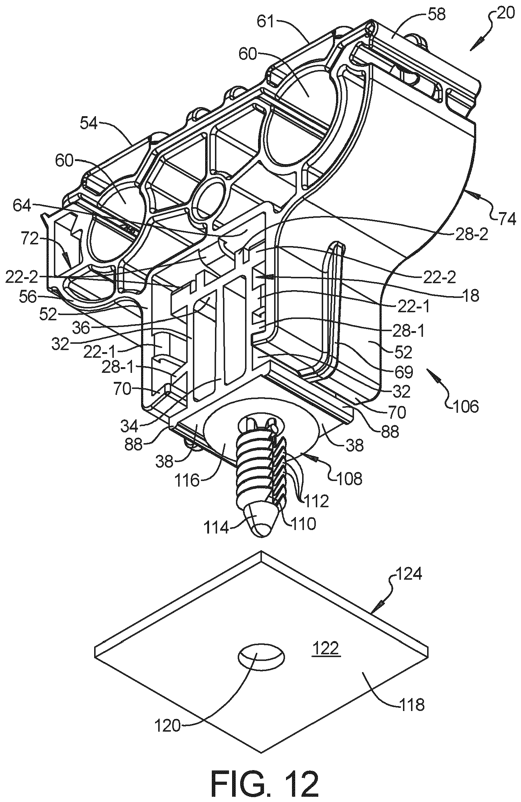

Different configurations of W bases may be used in place of the base 86, and different styles of bases may be used instead of a W base. For example, in FIGS. 7 though 11, the body 90 is rectangular, the hole 82 is square shaped to accommodate the rectangular body 90 and the protrusions 92 projecting therefrom, and the feet 88 of the base 86 are semi-cylindrical protrusions. However, the body and feet of the base may have other shapes, and the hole may be shaped differently to accommodate the body of the base. In addition, the base may include a feature that seals the interface between the body of the base and the hole in the panel and/or biases the inner frame away from the panel to maintain the base in engagement with the underside surface of the panel and thereby minimize noise and vibrations. Examples of these variations of the base are described below and shown in FIGS. 12 through 15.

Referring now to FIG. 12, a tube clamp 106 is similar or identical to the tube clamp 80 except that the tube clamp 106 includes a base 108 in place of the base 86. The base 108 includes a shaft 110, a plurality of ribs 112 projecting from a side surface of the shaft 110, a conical nose 114 disposed at the distal end of the shaft 110, and a seal 116 disposed at the proximal end of the shaft 110. The ribs 112 are spaced apart from one another along the longitudinal axis of the shaft 110. Each rib 112 extends around the perimeter of the shaft 110 and has a hollow conical frustum shape. The base 108 may be referred to as a fir tree base since the ribs 112 resemble fir tree branches. The seal 116 also has a hollow conical frustum shape and may be referred to as an umbrella seal due to its shape.

To secure the tube clamp 106 to a panel 118, the tube clamp 106 is moved to insert the shaft 110 of the base 108 into a hole 120 in the panel 118. The hole 120 is circular to accommodate the cylindrical shape formed by the ribs 112. As the shaft 110 enters the hole 120, the ribs 112 engage the perimeter of the hole 120, which cause the ribs 112 to flex inward toward the shaft 110. When the ribs 112 are moved past the hole 120, the ribs 112 return to their relaxed state. In this position, the rib 112 or pair of ribs 112 closest to an underside surface 122 of the panel 118 engages the underside surface 122 and thereby inhibits withdrawal of the base 108 from the hole 120 in the panel 118. In addition, the seal 116 engages a top surface 124 of the panel 118 to seal the interface between the shaft 110 and the hole 120 and bias the inner frame 18 away from the panel 118 to maintain the rib(s) 112 in engagement with the panel 118 and thereby minimize noise and vibrations.

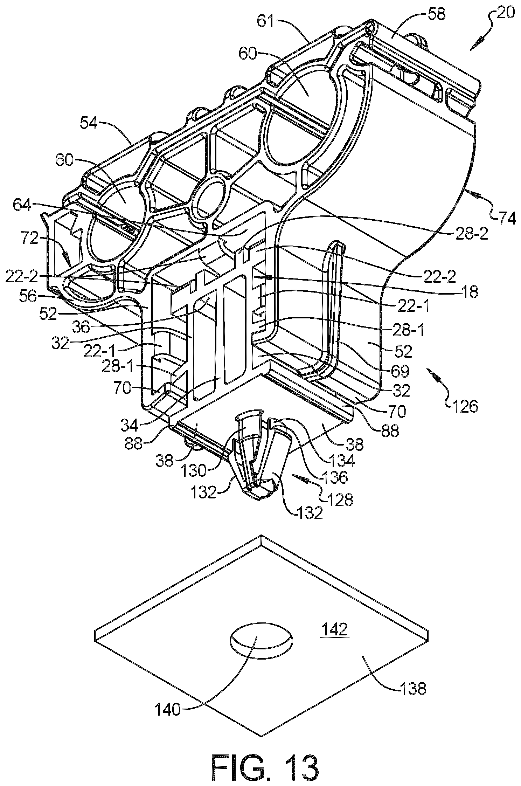

Referring now to FIG. 13, a tube clamp 126 is similar or identical to the tube clamp 80 except that the tube clamp 126 includes a base 128 in place of the base 86. The base 128 is another example of a W base. The base 128 includes a shaft 130, a pair of wings 132 projecting outward and upward from the distal end the shaft 130, and a tab 134 projecting from the free end of each wing 132 to define a ledge 136. The shaft 130 has a cylindrical shape. The wings 132 are configured to flex toward and away from the shaft 130 about their connection with the distal end of the shaft 130.

To secure the tube clamp 126 to a panel 138, the shaft 130 of the base 128 is inserted into a hole 140 in the panel 138. The hole 140 is circular to accommodate the shape of the base 128 when the wings 132 are pressed against the shaft 130. As the shaft 130 enters the hole 140, the wings 132 engage the perimeter of the hole 120, which cause the wings 132 to flex inward toward the shaft 130. When the ledges 136 of the wings 132 are moved past the hole 120, the wings 132 flex outward away from the shaft 130, and the tabs 134 of the wings 132 engage the perimeter of the hole 120. In this position, the ledges 136 engage an underside surface 142 of the panel 138 and thereby inhibit withdrawal of the base 128 from the hole 140 in the panel 138.

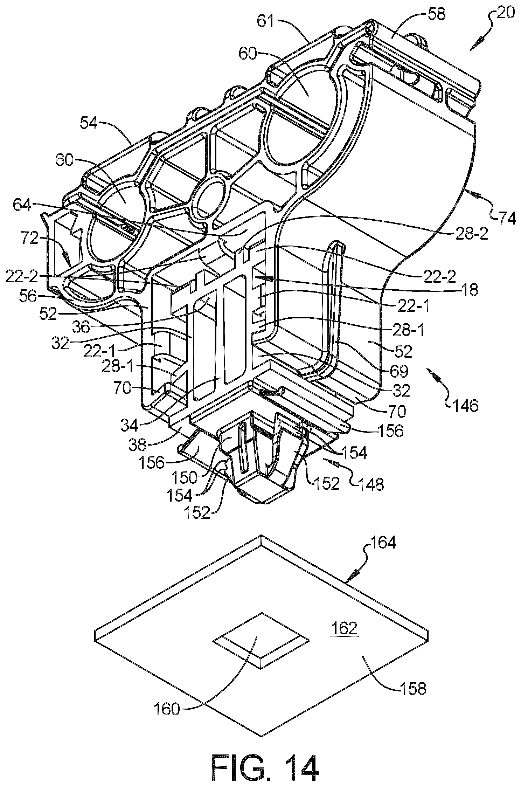

Referring now to FIG. 14, a tube clamp 146 is similar or identical to the tube clamp 80 except that the tube clamp 146 includes a base 148 in place of the base 86. The base 148 is yet another example of a W base. The base 148 includes a shaft 150, a pair of wings 152 projecting outward and upward from opposite side surfaces of the shaft 150 adjacent to its distal end, a plurality of teeth 154 at the free end of each wing 152, and a pair of tabs 156 projecting downward and sideways from the bottom wall 38 of the inner frame 18 or plates attached thereto. The shaft 150 has a rectangular shape. The wings 152 are configured to flex toward and away from the shaft 150 about their connection with the shaft 150.

To secure the tube clamp 146 to a panel 158, the shaft 150 of the base 148 is inserted into a hole 160 in the panel 158. The hole 160 is rectangular to accommodate the shape of the base 148 when the wings 152 are pressed against the shaft 150. As the shaft 150 enters the hole 160, the wings 152 engage the perimeter of the hole 160, which cause the wings 152 to flex inward toward the shaft 150. When at least one pair of the teeth 154 of the wings 152 is moved past the hole 160, the wings 152 flex outward away from the shaft 150, and the teeth 154 engage the perimeter of the hole 120. In this position, the teeth 154 engage an underside surface 162 of the panel 158 and thereby inhibit withdrawal of the base 148 from the hole 160 in the panel 158. In addition, the tabs 156 engages a top surface 164 of the panel 158 to bias the inner frame 18 away from the panel 158 to maintain the teeth 154 in engagement with the panel 158 and thereby minimize noise and vibrations.

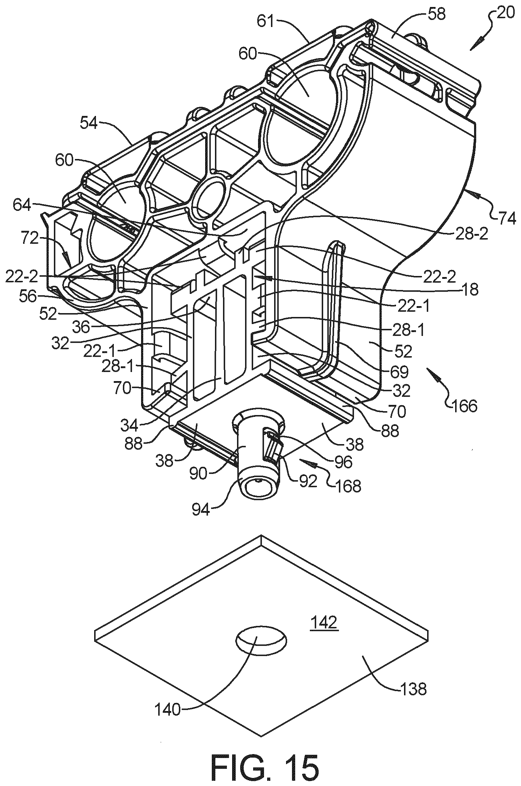

Referring now to FIG. 15, a tube clamp 166 is similar or identical to the tube clamp 80 except that the tube clamp 166 includes a base 168 in place of the base 86. The base 168 is similar identical to the base 86 except that the body 90 of the base 168 is cylindrical instead of rectangular. Therefore, the reference numbers used for the base 168 are the same as those used for the base 86, and the process for securing the tube clamp 166 to the panel 138 need not be described since it is the same as the process for securing the tube clamp 80 to the panel 84.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.).

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

As used herein, the term "and/or" includes any and all combinations of one or more of the associated listed items. As used herein, the phrase at least one of A, B, and C should be construed to mean a logical (A OR B OR C), using a non-exclusive logical OR, and should not be construed to mean "at least one of A, at least one of B, and at least one of C."

## Claims

1. A tube clamp (10) for securing at least one tube to a panel (16), the tube clamp comprising:
an inner frame (18) configured to be mounted to the panel (16), the inner frame including a pair of side walls and a top wall;
an outer frame (20) configured to clamp the at least one tube therein, the outer frame including a main body and a pair of legs projecting downward from the main body; and
a plurality of tethers (22) connecting the inner and outer frames (18, 20) to one another, the plurality of tethers (22) including at least one vertical tether projecting upward from the top wall of the inner frame to the main body of the outer frame.

2. The tube clamp (10) of claim 1 wherein the top wall of the inner frame (18)is flat.

3. The tube clamp (10) of claim 1 or 2 wherein the plurality of tethers (22) further includes at least one horizontal tether projecting outward from one of the side walls of the inner frame to one of the legs of the outer frame.

4. The tube clamp (10) of claim 3 wherein the at least one horizontal tether (22-1) includes a pair of horizontal tethers with one of the horizontal tethers projecting outward from one of the side walls of the inner frame to one of the legs of the outer frame, and the other one of the horizontal tethers projecting outward from the other one of the side walls of the inner frame (18) to the other one of the legs of the outer frame.

5. The tube clamp (10) of claim 4 wherein the one horizontal tether is attached to the one side wall at a front side of the tube clamp and is attached to the one leg at a rear side of the tube clamp, and the other horizontal tether is attached to the other side wall at the rear side of the tube clamp and is attached to the other leg at the front side of the tube clamp.

6. The tube clamp (10) of claim 4 or 5 wherein the at least one vertical tether includes three vertical tethers (22-2) projecting upward from the top wall of the inner frame to the main body of the outer frame.

7. The tube clamp (10) of claim 6 wherein two of the three vertical tethers (22-2) are attached to the top wall of the inner frame on the same side of the tube clamp and the third vertical tether is attached to the top wall on the opposite side of the tube clamp, and the two vertical tethers are attached to the main body of the outer frame on the same side of the tube clamp, and the third vertical tether is attached to the main body of the outer frame on the opposite side of the tube clamp.

8. The tube clamp (10) of any of claims 1 to 7 wherein:
the inner frame (18) further includes horizontal tabs (28-1) that project outward from the side walls and vertical tabs that project upward from the top wall;
the horizontal tabs (28-1) are configured to engage the legs on the outer frame to limit movement of the outer frame relative to the inner frame in a side-to-side direction; and
the vertical tabs are configured to engage the main body of the outer frame to limit movement of the outer frame relative to the inner frame in a vertical direction.

9. The tube clamp (10) of any of claims 1 to 8, wherein each leg of the outer frame (20) includes a tab that projects inward from its distal end toward one of the side walls on the inner frame and is configured to engage the one side wall to limit movement of the outer frame relative to the inner frame in a side-to-side direction.

10. The tube clamp (10) of any of claims 1 to 9, wherein the inner frame (18) further includes a bottom wall and a plurality of stud engaging claws, the bottom wall defining a hole configured to receive a stud fixed to the panel, the plurality of stud engaging claws projecting inward from the side walls and configured to engage threads on the stud.

11. The tube clamp (10) of claim 10 wherein:
the inner frame (18) further includes a pair of feet (30) that project outward and downward from lower corners thereof where the side walls meet the bottom wall; and
the feet (30) are configured to act as springs that bias the tube clamp upward and thereby maintain the stud engaging claws in engagement with the threads on the stud.

12. The tube clamp (10) of claim 1 wherein the inner frame further includes a bottom wall and a base projecting downward from the bottom wall and configured to be retained within a hole in the panel (16) via a snap fit.

13. The tube clamp (10) of claim 12 wherein:
the base (86) includes an elongated body and a pair of protrusions that project in opposite directions from the elongated body;
as the base (86) enters the hole in the panel, the protrusions are configured to flex inward toward one another due to engagement with a perimeter of the hole; and
when the protrusions are moved past the hole in the panel, the protrusions return to their relaxed state and engage an underside surface of the panel and thereby inhibit withdrawal of the base from the hole in the panel.

14. The tube clamp (10) of claim 13 wherein:
the elongated body is a hollow rectangular body;
the rectangular body defines a pair of openings in which the protrusions are positioned, each opening having a pair of side edges and a bottom edge; and
each protrusion extends from the bottom edge of one of the openings and is detached from the side edges of the one opening.

15. The tube clamp (10) of claim 12 wherein:
the base (86) includes an elongated body and a plurality of ribs that project from a side surface of the elongated body and are spaced apart from one another along a longitudinal axis of the elongated body;
as the base enters the hole in the panel, the plurality of ribs (112) are configured to flex inward toward the elongated body due to engagement with a perimeter of the hole; and
when the plurality of ribs are moved past the hole in the panel, the plurality of ribs return to their relaxed state and engage an underside surface of the panel and thereby inhibit withdrawal of the base from the hole in the panel.
